Europäisches Patentamt

European Patent Office

Office européen des brevets

(19)

(11) **EP 1 149 429 B1**

(12) **EUROPÄISCHE PATENTSCHRIFT**

(45) Veröffentlichungstag und Bekanntmachung des Hinweises auf die Patenterteilung:
 **18.06.2003 Patentblatt 2003/25**

(51) Int Cl.[7]: **H01M 10/42**

(21) Anmeldenummer: **00906156.5**

(86) Internationale Anmeldenummer:
 **PCT/DE00/00177**

(22) Anmeldetag: **19.01.2000**

(87) Internationale Veröffentlichungsnummer:
 **WO 00/044061 (27.07.2000 Gazette 2000/30)**

(54) **NICHTWÄSSRIGE ELEKTROCHEMISCHE ZELLE**

 NON-AQUEOUS ELECTROCHEMICAL CELL

 CELLULE ELECTROCHIMIQUE NON AQUEUSE

(84) Benannte Vertragsstaaten:
 **AT BE CH CY DE DK ES FI FR GB GR IE IT LI LU MC NL PT SE**

(30) Priorität: **23.01.1999 DE 19902600**

(43) Veröffentlichungstag der Anmeldung:
 **31.10.2001 Patentblatt 2001/44**

(73) Patentinhaber: **Fortu Bat Batterien GmbH 76327 Pfinztal (DE)**

(72) Erfinder:
 - **HAMBITZER, Günther**
 **D-76327 Pfinztal (DE)**
 - **KREIDLER, Bernd**
 **D-76327 Pfinztal (DE)**
 - **DÖRFLINGER, Ulrike**
 **D-76327 Pfinztal (DE)**
 - **DÖGE, Volker**
 **D-76229 Karlsruhe (DE)**
 - **SCHORB, Klaus**
 **D-76287 Rheinstetten (DE)**

(74) Vertreter: **Pfeifer, Hans-Peter, Dr. et al Patentanwälte Dr. H.-P. Pfeifer Dr. P. Jany Beiertheimer Allee 19 76137 Karlsruhe (DE)**

(56) Entgegenhaltungen:
 **EP-A- 0 391 694    WO-A-98/59387**
 **FR-A- 2 775 124    US-A- 4 382 117**
 **US-A- 4 407 910    US-A- 4 844 993**
 **US-A- 5 741 608**

 - **PATENT ABSTRACTS OF JAPAN vol. 012, no. 320 (E-651), 30. August 1988 (1988-08-30) & JP 63086355 A (FUJI ELELCTROCHEM CO LTD), 16. April 1988 (1988-04-16)**
 - **PATENT ABSTRACTS OF JAPAN vol. 012, no. 320 (E-651), 30. August 1988 (1988-08-30) & JP 63086358 A (FUJI ELELCTROCHEM CO LTD), 16. April 1988 (1988-04-16)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine nichtwässrige elektrochemische Zelle. Solche Zellen haben große praktische Bedeutung, insbesondere als wiederaufladbare elektrische Batterien (Sekundärzellen).

Bei solchen Zellen ist die erforderliche Sicherheit ein wichtiges Problem. Bei vielen Zelltypen kann insbesondere eine starke Erwärmung zu sicherheitskritischen Zuständen führen. Es kann vorkommen, daß das Zellgehäuse platzt oder zumindest undicht wird und schädliche gasförmige oder feste Substanzen oder sogar Feuer austreten. Eine rasche Temperaturerhöhung kann nicht nur durch unsachgemäße Behandlung, sondern auch durch interne oder externe Kurzschlüsse beim Betrieb der Zelle verursacht werden.

Besonders kritisch sind Zellen, bei denen ein starker Temperaturanstieg im Zellinnenraum dazu führt, daß in verstärktem Umfang exotherme Reaktionen stattfinden, die ihrerseits zu einem weiteren Anstieg der Temperatur führen. Dieser selbstverstärkende Effekt wird in der Fachwelt als "thermal runaway" bezeichnet. Solche Probleme werden vor allem im Zusammenhang mit Alkalimetallzellen, bei denen an den Elektroden als aktive Masse ein Alkalimetall abgeschieden bzw. eingelagert wird, diskutiert.

Zur experimentellen Erprobung werden sogenannte "Nagel-tests" durchgeführt. Dabei wird ein interner Kurzschluß der Zelle dadurch simuliert, daß die positive und die negative Elektrode der Zelle mit einem Nagel durchstochen werden. Beispielsweise an Lithium-Ionen-Zellen wurde bei solchen Tests eine starke Temperaturerhöhung und ein hef-tiger Austritt von brennenden und giftigen Batteriekompo-nenten beobachtet. In der Praxis können solche Sicherheitsprobleme nicht nur bei mechanischer Beschädigung der Batterie, sondern unter Umständen auch im Normalbetrieb auftreten. Ein besonderes Problem stellt die Bildung von Dendriten beim Laden an der Elektrode dar, die den Separator der Batterie durchstoßen und einen Kurzschluß zur benachbarten Gegenelektrode bewirken kön-nen.

Batteriehersteller versuchen, durch elektronische, mechanische oder chemische Mechanismen den Lade- bzw. Entladestromkreis so zu kontrollieren, daß der Stromfluß unterhalb einer kritischen Temperatur unterbrochen wird, so daß kein "thermal runaway" auftreten kann. Hierzu werden beispielsweise drucksensible mechanische oder temperatursensible elektronische Schalter in den internen Batterieschaltkreis integriert. Weiterhin wird diskutiert, durch chemische Reaktionen im Elektrolyten oder mechanische Veränderungen des Separators den Stromtransport innerhalb dieser Komponenten irreversibel zu unterbrechen, sobald eine kritische Temperaturschwelle erreicht wird. Schließlich ist es generell gebräuchlich, die Verwendung genau spezifizierter elektronischer Ladegeräte vorzuschreiben, durch die die Ladeströme und Ladeschlußspannungen streng limitiert werden.

Trotz dieser Maßnahmen ist der Sicherheitsstandard bei vielen nichtwässrigen Zellen nicht in vollem Umfang befriedigend.

Beispielsweise werden Li-Ionen-Zellen nur mit Kapazitäten bis 1,3 Ah eingesetzt, weil bei größeren Zellen die Sicherheitsrisiken auf Basis des gegenwärtigen Standes der Technik zu hoch sind.

Der Erfindung liegt die Aufgabe zugrunde, die Sicherheit wiederaufladbarer nichtwässriger elektrochemischer Zellen auf möglichst einfache und kostengünstige Weise zuverlässig zu erhöhen.

Die Aufgabe wird durch eine Zelle gemäß Anspruch 1 gelöst.

Aus dem US Patent 4,844,993 ist es bekannt, ein Lithiumhalogenid innerhalb einer Flüssigkathode zu verwenden, um die Spannungsregulierung der Zelle zu verbessern Im Inneren den pörosen Kohleanode ist Cu(I)Cl enthalten.

Durch die Erfindung wird eine wesentliche Verbesserung der Betriebssicherheit erreicht. Die Reaktionsgeschwindigkeit im Falle eines internen Kurzschlusses wird um ein Vielfaches vermindert, wobei der Druckanstieg drastisch reduziert wird, so daß das Risiko des Austritts fester oder gasförmiger Substanzen oder sogar von Feuer entscheidend vermindert wird. Daneben werden in vielen Fällen zusätzliche positive Effekte erzielt. Insbesondere wurde experimentell eine wesentliche Verminderung der Selbstentladung beim Lagern der Zellen beobachtet.

Die Ursachen der vorteilhaften Wirkung der Erfindung sind noch nicht in vollem Umfang aufgeklärt. Es ist anzunehmen, daß das im Bereich der Elektrode angeordnete feste Salz den Zutritt von Elektrolyt zu der Elektrodenoberfläche verzögert und dadurch sicherheitskritische Reaktionen zwischen an der Oberfläche der Elektrode gebildeten bzw. abgelagerten Substanzen und dem Elektrolyt verlangsamt. Auch die Ausbreitung einer lokalen Erhitzung wird durch das Salz reduziert. Weiter ist davon auszugehen, daß bei einer starken lokalen Temperaturerhöhung das Salz schmilzt. Die dafür benötigte Schmelzwärme wird der Reaktion entzogen. Dieser Effekt dürfte schon bei Temperaturen unterhalb des Schmelzpunktes des reinen Salzes auftreten, weil infolge der in der Zelle ablaufenden elektrochemischen Reaktionen sowie infolge von bei lokalen Kurzschlüssen zusätzlich auftretenden Reaktionen Salzmischungen vorliegen, deren Schmelzpunkt erniedrigt ist. Schließlich ist aufgrund der bisherigen experimentellen Erprobung davon auszugehen, daß infolge der Gegenwart des festen Salzes im Bereich der Elektrode im Falle eines Kurzschlusses chemische Reaktionen stattfinden, die die chemischen Gleichgewichte der erwähnten exothermen Reaktionen so verschieben, daß diese nur noch in stark vermindertem Umfang stattfinden. Besonders bedeutsam ist die durch die Erfindung erreichte erhöhte Sicherheit wegen der mit dem Ladevorgang verbundenen Sicherheitsrisiken.

Ein besonders wichtiges Anwendungsgebiet der Erfindung sind Zellen, bei denen die negative Elektrode (Anode) im geladenen Zustand ein Metall als aktive Masse enthält. Hierzu gehören insbesondere Zellen, deren aktives Metall ein Alkalimetall, ein Erdalkalimetall oder ein Metall der zweiten Nebengruppe des Periodensystems (vor allem Zink oder Aluminium) ist. Speziell Lithium-, Natrium- und Kalziumzellen bergen besondere Sicherheitsrisiken, weil sie im geladenen Zustand an der Anode ein besonders reaktives aktives Metall enthalten. Beispielsweise bei Lithium-Ionen-Akkus wird Lithium in eine Elektrode, die aus Graphit oder einer kohlenstoffhaltigen Verbindung besteht, eingelagert. Der Elektrolyt dieser Zellen basiert auf einem organischen Lösungsmittel. Diese Bestandteile können bei äußerer Hitzeeinwirkung oder bei infolge von Kurzschluß verursachter plötzlicher Erwärmung heftig reagieren.

Ein wichtiges Anwendungsgebiet der Erfindung sind Zellen, bei denen die negative Elektrode im geladenen Zustand ein aktives Metall enthält, ein auf Schwefeldioxid basierender Elektrolyt verwendet wird und beim Entladen der Zelle Ionen des aktiven Metalls in die positive Elektrode eingelagert werden. Beim Laden einer solchen Zelle wird das aktive Metall auf der negativen Elektrode abgeschieden. Als "auf $SO_2$ basierende Elektrolyten" ($SO_2$-based electrolyte) werden Elektrolytlösungen bezeichnet, die $SO_2$ nicht nur als Zusatz in geringer Konzentration enthalten, sondern bei denen die Beweglichkeit einer das aktive Metall enthaltenden Spezies durch das $SO_2$ gewährleistet wird, das $SO_2$ also ein Lösungsmittel für die Spezies darstellt, die in dem Elektrolyt die Ladung, d.h. die Ionen des aktiven Metalls, transportiert. Solche Zellen können vollständig anorganisch in dem Sinne sein, daß sie weder Kohlenstoff noch organische Bestandteile enthalten.

Besondere praktische Bedeutung haben auch unter derartigen Zellen diejenigen, bei denen das aktive Metall der negativen Elektrode ein Alkalimetall, insbesondere Lithium oder Natrium ist. In diesem Fall wird die ladungstransportierende Spezies in dem Elektrolyt in der Regel von Ionen eines Leitsalzes, vorzugsweise eines Tetrachloroaluminats des Alkalimetalls, beispielsweise $LiAlCl_4$, gebildet. Besonders vorteilhaft sind dabei Zellen, deren positive Elektrode ein Metalloxid, speziell eine Interkalationsverbindung, enthält. Eine derartige Zelle ist beispielsweise in dem US-Patent 5,213,914 beschrieben.

Um seine positive Wirkung zu entfalten, muß das feste Salz in dem Sinne "im Bereich" der Elektrode angeordnet sein, daß es auf die in sicherheitskritischen Situationen in der unmittelbaren Umgebung der Elektrodenoberfläche ablaufenden exothermen Reaktionen einwirkt. Bevorzugt ist das Salz ein Alkalihalogenid, insbesondere LiF, NaCl oder LiCl. Ein unmittelbarer Kontakt zwischen der Elektrode und dem Salz ist nicht unbedingt erforderlich, jedoch ist es in der Regel bevorzugt, wenn zumindest bei einem Teil des Lade- und Entladezyklus der Zelle ein Kontakt zu der Elektrode, speziell zu einer an der Elektrode gebildeten aktiven Masse, besteht.

Die poröse Struktur des Salzes sollte so ausgebildet und angeordnet sein, daß die beim Laden der Zelle an der Elektrode zunehmende aktive Masse in die Poren der porösen Salzstruktur eindringt. Dadurch wird erreicht, daß das Salz in großflächigem Kontakt zu beim Laden der Zelle an der Elektrode gebildeten Substanzen, die zu sicherheitskritischen Zuständen führen können bzw. die im Fall eines "thermal runaway" Wärme abgeben, steht. Dieser großflächige Kontakt erhöht die Wirksamkeit des Salzes.

Die Erfindung wird nachfolgend anhand von in den Figuren schematisch dargestellten Ausführungsbeispielen näher erläutert; es zeigen:

Fig. 1    Eine perspektivische Darstellung einer erfindungsgemäßen elektrochemischen Zelle mit durchsichtigem Gehäuse,

Fig. 2    eine Prinzipdarstellung der Anordnung einer Schüttung aus festem Salz zwischen einer Elektrode und einem Separator,

Fig. 3    eine Prinzipdarstellung entsprechend Figur 2 mit einer Salzstruktur in Form einer porösen Feststoffschicht.

Fig. 4    eine Prinzipdarstellung entsprechend Figur 3 mit einer alternativen Ausführungsform einer Salzstruktur in Form einer porösen Feststoffschicht.

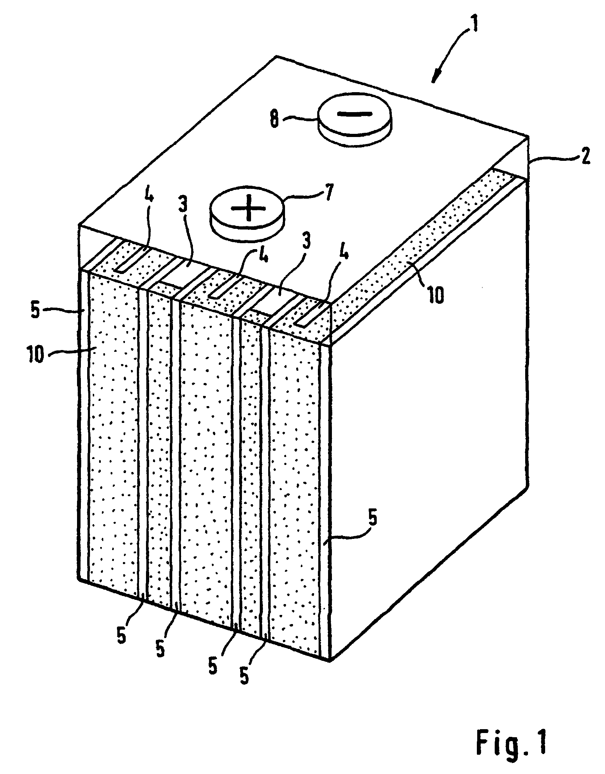

Die in Figur 1 dargestellte Batterie 1 hat ein Gehäuse 2, das durchsichtig dargestellt ist, um den Aufbau im Inneren sichtbar zu machen. In der Praxis besteht das Gehäuse 2 aus undurchsichtigem Stahlblech.

In dem Gehäuse 2 sind mehrere positive Elektroden 3 und negative Elektroden 4 zu erkennen, die jeweils von einem Separator 5 getrennt sind. Wie in der Batterietechnik weitgehend gebräuchlich, bilden die Elektroden 3,4 Schichten mit im Verhältnis zu ihrer Flächenausdehnung geringer Dicke. Die Flächenausdehnung der Separatoren ist vorzugsweise etwas größer als die der Elektroden. Die Anordnung ist - wie dargestellt - insgesamt sandwichartig, wobei jeweils eine positive Elektrode 3 und eine negative Elektrode 4 von einem dazwischen angeordneten Separator 5 getrennt sind. Zwischen der negativen Elektrode 4 und dem Separator 5 befindet sich ein Salz 10 im festen Zustand.

Der Innenraum des Gehäuses 2 ist mindestens bis zur Oberkante der Elektroden mit einem nicht dargestellten Elektrolyt gefüllt. Die Elektroden sind mittels nicht dargestellter Drähte an externe Batteriekontakte 7,8 angeschlossen. Jeweils eine positive Elektrode 3, eine negative Elektrode 4 und der dazwischen befindliche Elektrolyt bilden eine elektrochemische Zelle.

In Figur 1 ist beispielhaft eine Anordnung mit drei negativen Elektroden 4 und zwei positiven Elektroden 3 dargestellt. Im dargestellten Fall, bei dem die positive Elektrode von einer Schicht einer Interkalationsverbindung eines Metalloxids gebildet wird, entspricht die Dicke der Salzschicht zwischen der negativen Elektrode 4 und dem benachbarten Separator 5 näherungsweise der Dicke der positiven Elektrode. Vielfach ist jedoch eine geringere Dicke der Salzschicht ausreichend. Sie beträgt bevorzugt höchstens 70 %, besonders bevorzugt höchstens 50 % der Dicke der positiven Elektrode.

Abgesehen von dem im Bereich der negativen Elektrode vorgesehenen Salz 10 ist die Anordnung konventionell. Es können auch andere vorbekannte Zell- bzw. Batteriekonstruktionen verwendet werden.

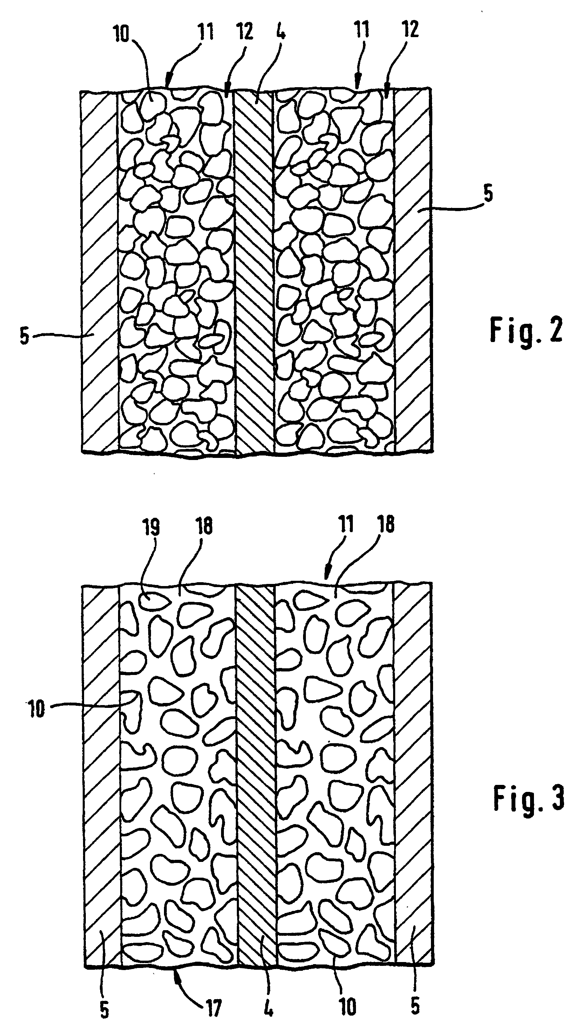

Figur 2 zeigt schematisch und vergrößert die Anordnung einer porösen Struktur 11 des Salzes 10 im Bereich der negativen Elektrode 4. Dabei kann die poröse Struktur 11 eine lose Schüttung von Salzkörnern sein. Die Elektrode 4 und der Separator 5 werden bei der Herstellung der Batterie zunächst mit Abstand montiert und danach wird der dazwischen vorhandene Zwischenraum 12 mit Salz gefüllt. Dabei muß durch geeignete konstruktive Maßnahmen sichergestellt werden, daß die Salzschüttung nicht aus dem Zwischenraum 12 herausrieseln kann. Am einfachsten läßt sich dies dadurch erreichen, daß, wie in Fig. 1 zu erkennen ist, alle in der Batterie 1 nach Montage der Elektroden und Separatoren verbleibenden Hohlräume mit dem Salz 10 gefüllt werden. Es besteht jedoch auch die Möglichkeit, an den Stirnseiten der Zwischenräume 12 Begrenzungswände (vorzugsweise aus einem anorganischen, elektrisch isolierenden Material wie beispielsweise Keramik) vorzusehen, die das Herausrieseln des Salzes 10 aus den Zwischenräumen 12 verhindern.

Alternativ kann die in Fig. 2 dargestellte poröse Struktur 11 ein Verbund von Salzpartikeln sein, der beispielsweise durch Verkleben (z.B. mittels eines keramischen Bindemittels) oder Zusammensintern von Salzkörnern gebildet ist.

Figur 3 zeigt schematisch eine Ausführungsform, bei der das Salz 10 in einem porösen Feststoff-Schichtmaterial 17 enthalten ist. Bei der dargestellten Ausführungsform ist das Schichtmaterial dadurch realisiert, daß ein poröses Trägermaterial 18 derartig mit dem Salz 10 beschichtet ist, daß seine Poren 19 nicht vollständig geschlossen sind. Das Trägermaterial kann beispielsweise ein Tragkörper aus einem chemisch inerten formstabilen Material, wie beispielsweise Glas oder Oxidkeramik sein. Die Beschichtung mit Salz kann durch Eintauchen in eine hochkonzentrierte (vorzugsweise gesättigte) Salzlösung und anschließendes Verdampfen des Wassers erfolgen. Da ein solches Verfahren verhältnismäßig aufwendig ist, erscheint es für die Mehrzahl der Anwendungen weniger bevorzugt, jedoch sind Anwendungsfälle möglich, bei denen die mit der Verwendung eines starren porösen Tragkörpers verbundene erhöhte mechanische Stabilität der porösen Salzstruktur vorteilhaft ist und den erhöhten Herstellungsaufwand rechtfertigt.

Als Trägermaterial 18 kann statt eines starren Tragkörpers auch eine flexible Faserverbundstruktur, beispielsweise in Form von Filz, Vlies oder Gewebe, verwendet werden. Um eine solche Faserverbundstruktur derartig mit Salz 10 zu beschichten, daß die Poren 19 nicht vollständig verschlossen werden, eignet sich ein Imprägniervorgang, bei dem die Faserverbundstruktur (beispielsweise durch Tauchen oder Spritzen) mit einer relativ dünnflüssigen Flüssigkeit benetzt wird, die ein geeignetes Bindemittel und das Salz 10 enthält. Als Bindemittel kommen für diesen Zweck insbesondere inerte Polymere, vor allem Fluorpolymere, in Betracht. Auch die Faserverbundstruktur kann aus einem inerten Polymer bestehen. Daneben sind inerte anorganische Fasermaterialien, insbesondere Glasfasern, geeignet.

Die Korngröße der porösen Struktur 11 kann in erheblichen Grenzen variieren. Die experimentelle Erprobung poröser Salzstrukturen ohne weitere Bestandteile hat ergeben, daß die sicherheitserhöhende Wirkung bis zu einer gewissen Grenze mit abnehmender Korngröße besser wird. Bei sehr kleinen Korngrößen ist jedoch eine Verschlechterung der Sicherheitswirkung beobachtet worden. Dies dürfte darauf zurückzuführen sein, daß eine aktive Masse, deren Volumen auf der Oberfläche der Elektrode 4 während des Lade- oder Entladevorgangs zunimmt, in eine extrem feinporige Struktur nicht mehr eindringen kann, sondern das Salz von der Oberfläche der Elektrode weg verdrängt. Um diesen Effekt zu verhindern, darf die Struktur, in der das Salz vorliegt, nicht zu feinporig sein. Außerdem sollte durch konstruktive Maßnahmen dafür gesorgt werden, daß die poröse Struktur 11 so an der Oberfläche der Elektrode 4 fixiert wird, daß eine an der Elektrodenoberfläche gebildete aktive Masse in ihre Poren eindringt, ohne das Salz insgesamt wegzudrücken. Diesbezüglich ist eine poröse Struktur im Form eines Verbundes aus Salzpartikeln oder eine mittels eines porösen Feststoff-Schichtmaterials gebildete poröse Struktur gegenüber einer losen Schüttung vorteilhaft. Die im Einzelfall optimale Korngröße muß experimentell bestimmt werden. Generell haben sich bei Salzschüttungen mittlere Korngrößen zwischen 100 μm und 500 μm bewährt.

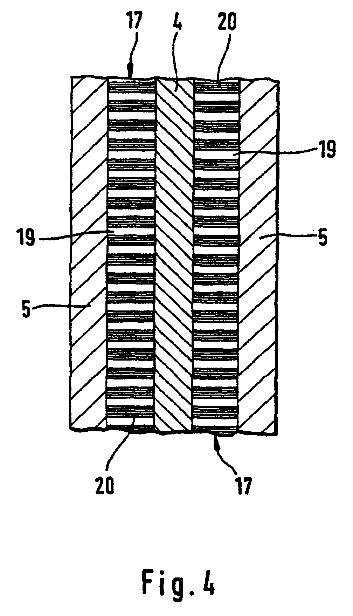

Figur 4 zeigt - wiederum als stark schematisierte Prinzipdarstellung - eine Ausführungsform, bei der das Schichtmaterial 17 aus einer Mischung 20 besteht, die das Salz und ein Bindemittel enthält. In der praktischen Erprobung dieser Ausführungsform wurde Polytetrafluorethylen intensiv mit dem Salz gemischt, das Gemisch zu einer Folie mit etwa 0,5 mm Stärke ausgewalzt und die Folie mechanisch mittels einer Nadelwalze perforiert. Dabei ergeben sich Poren 19, die, wie in Figur 4 dargestellt, die Feststoffschicht gerade durchdringen. Bei der Herstellung größerer Stückzahlen können jedoch auch andere bekannte Verfahren zur Herstellung poröser Kunststoffschichten auf Basis eines Polymers mit ausreichenden Bindungseigenschaften verwendet werden, in deren Rezeptur das Salz integriert wird. Auch hier sind vor allem Fluorpolymere geeignet.

Eine solche Ausführungsform hat den Vorteil, daß die poröse Struktur des Salzes 10 nicht durch das reine Salz, sondern durch die Porosität des Salz-Bindemittel-Verbundes bestimmt wird. Dadurch ist die Porengröße des Feststoff-Schichtmaterials 17 unabhängig von der Korngröße des Salzes. Deswegen kann bei dieser Ausführungsform vorteilhafterweise eine extrem fein gemahlenes Salz mit einer mittleren Korngröße von weniger als 50 μm in einer Struktur verwendet werden, deren Poren groß genug sind, um das gewünschte Eindringen der an der Elektrodenoberfläche gebildeten aktiven Masse in die Poren des Schichtmaterials zu ermöglichen.

Die erläuterten Ausführungsformen zeigen, daß als Feststoff-Schichtmaterial sowohl starre als auch elastische Materialien in Betracht kommen, die die erforderlichen Voraussetzungen für den vorliegenden Anwendungsfall erfüllen. Hierzu gehört, daß sie eine im Verhältnis zu ihrer Flächenausdehnung dünne Schicht bilden, die parallel zu der Elektrode, in deren Bereich sich das Salz befinden soll, angeordnet werden können. Außerdem muß das Material eine ausreichende Menge Salz pro Volumeneinheit enthalten. Dies läßt sich im wesentlichen auf zwei Wegen erreichen, nämlich einmal durch Verwendung eines porösen Trägermaterials, das derartig mit Salz beschichtet wird, daß die Poren nicht vollständig geschlossen sind und andererseits dadurch, daß das poröse Schichtmaterial selbst aus einer Mischung besteht, die das Salz enthält.

Die erforderliche Menge des festen Salzes im Bereich einer Elektrode sollte im Einzelfall experimentell festgelegt werden. Als Richtschnur kann man die Molzahl des Salzes in Relation zu der Molzahl der maximal an der Elektrode abgelagerten aktiven Masse ansehen. In der Regel sollte die Molzahl des Salzes mindestens der 0,1-fachen, bevorzugt mindestens der 0,3-fachen Molzahl der maximalen aktiven Masse entsprechen.

Beispiele:

Die Erfindung wurde mittels eines Versuchsaufbaus mit folgenden Merkmalen erprobt:

- Positive Elektrode: Interkalationselektrode aus 3 g $LiCoO_2$.

- Negative Elektrode: Blech aus Nickel mit einer Stärke von 0,05 mm, auf dessen Oberfläche während des Ladens der Zelle Lithium abgelagert wurde.

- Elektrolyt auf Basis von $SO_2$ mit $LiAlCl_4$ als Leitsalz mit einem $SO_2/LiAlCl_4$-Verhältnis von 1,5 in einer Menge von etwa 8 ml.

Die Zelle wurde auf ihre volle Kapazität von etwa 580 mAh aufgeladen und dann einem Nageltest unterworfen, bei dem ein Nagel durch die negative Elektrode und den Separator bis in die positive Elektrode durchgestochen und die Reaktion mit einer Hochgeschwindigkeits-Videoaufzeichnung beobachtet wurde.

Experimentelle Beobachtungen, die bei einem durch den Nageltest erzeugten künstlichen Kurzschluß unter sonst gleichen Bedingungen mit unterschiedlichen festen Salzen (jeweils etwa 1 g) im Bereich der negativen Elektrode gemacht wurden, sind in der nachfolgenden Tabelle 1 dargestellt.

Tabelle 1:

|  | ohne Salz | NaCl | CaCl | LiCl | LiF |
|---|---|---|---|---|---|
| Reaktions-Geschwindigkeit | 100 ms | 1,5 s | 0,8 s | 1-2 s | 1-3 s |
| Beobachtungen | Heftige Reaktion; starke Rauchentwicklung; große Flammenfront; Elektrodenblech zerstört | kaum Rauchentwicklung; kleine Flammenfront; Elektrodenblech noch gut erhalten | geringe Rauchentwicklung; kleine Flammenfront; Elektrodenblech nur stellenweise zerstört | Flammenfront in dem Bereich, wo sich kein Salz befindet | geringe Rauchentwicklung; kleine selbstlöschende Flammenfront |

Es zeigt sich sowohl hinsichtlich der Reaktionsgeschwindigkeit als auch hinsichtlich der Beobachtung des Reaktionsverlaufes eine dramatische Verbesserung des Sicherheitsverhaltens der Zelle durch das im Bereich der Elektrode angeordnete feste Salz. Statt der reinen Salze können auch Salzmischungen, wie beispielsweise eine Mischung aus LiF und LiCl verwendet werden.

Daneben wurde im Rahmen der gleichen Experimente das Selbstentladungsverhalten untersucht. Dabei wurde die Zelle bei einer Temperatur von 50°C, also einer Temperatur, die deutlich oberhalb der normalen Anwendungsbedingungen liegt, für 24 Stunden gelagert. Die Zelle ohne Salz im Bereich der Elektrode war nach 24 Stunden zu praktisch 100% entladen. Hingegen betrug bei den Zellen mit LiCl und LiF die Selbstentladung nur 30% bzw. 20%. Auch die Selbstentladung der Zellen wird somit durch die Gegenwart des Salzes im Bereich der Elektrode sehr positiv beeinflußt.

Nach dem gegenwärtigen Kenntnisstand der Erfinder ist die positive Wirkung des Salzes zum Teil durch die weiter oben erläuterten physikochemischen Effekte (Verlangsamung des Zutritts von Elektrolyt zu der Elektrodenoberfläche und Verlangsamung der Ausbreitung einer lokalen Erhitzung; Wärmeverbrauch als Schmelzwärme) zu erklären. Daneben sind die nachfolgenden Überlegungen zu berücksichtigen.

Es ist davon auszugehen, daß sicherheitskritische Reaktionen, insbesondere der "thermal runaway" mit der Bildung einer Deckschicht, insbesondere auf der negativen Elektrode von Alkalimetallzellen, zusammenhängen. Beispielsweise im Falle der Zelle Li|LiAlCl$_4$|LiCoO$_2$ reagiert das Lithium mit dem Schwefeldioxid zu einer Deckschicht aus Li$_2$S$_2$O$_4$. Gleichzeitig findet eine Lösungsreaktion in der Elektrolytlösung statt, bei der sich das Li$_2$S$_2$O$_4$ zu Li$^+$ und S$_2$O$_4$$^{2-}$ auflöst. Unter normalen Betriebsbedingungen sind damit keine Probleme verbunden, weil die stark exotherme Deckschicht-Bildungsreaktion nur langsam stattfindet.

Wenn jedoch aus irgendwelchen Gründen die Temperatur ansteigt, nimmt die Löslichkeit der Deckschicht zu. Damit erfolgt ein leichterer Zutritt des Elektrolyts zu dem auf der Elektrodenoberfläche abgelagerten Lithium und die exotherme Deckschicht-Bildungsreaktion wird stark beschleunigt. Die damit verbundene Wärmeerzeugung führt zu einem selbstverstärkenden Effekt, der einen "thermal runaway" verursachen kann. Es ist davon auszugehen, daß durch die Gegenwart des festen Salzes die Deckschicht-Bildungsreaktion stark verlangsamt wird und dies zu der beschriebenen entscheidenden Verbesserung der Betriebssicherheit beiträgt. Ähnliche Mechanismen gelten auch für andere Zellen. Insbesondere in Lithium-Ionen-Akkus findet auf der negativen Elektrode (die üblicherweise aus Graphit oder einer Kohlenstoffverbindung besteht) eine Deckschichtbildung statt, die eine wesentliche Ursache der Sicherheitsprobleme ist.

Vielfach werden zusätzliche Probleme durch exotherme Nebenreaktionen verursacht, die bei erhöhter Temperatur verstärkt stattfinden. Beispielsweise zerfällt LiAlCl$_4$, das Leitsalz des Elektrolyten der oben beschriebenen Zelle in LiCl und AlCl$_3$. Während diese Reaktion selbst nur schwach exotherm ist, führt sie zu stark exothermen Folgereaktionen des AlCl$_3$. Es ist anzunehmen, daß das feste Salz mit dem AlCl$_3$ reagiert, wobei für die Salze LiF und LiCl beispielsweise folgende Reaktionsmechanismen in Frage kommen:

$$AlCl_3 + LiCl \rightarrow LiAlCl_4$$

$$AlCl_3 + LiF \rightarrow LiAlCl_3F$$

Vorteilhaft bei diesen Reaktionen ist nicht nur, daß das AlCl$_3$ abreagiert und damit den erwähnten exothermen Nebenreaktionen entzogen wird, sondern auch, daß die Reaktionsprodukte der beschriebenen Reaktionen feste Substanzen sind, deren Bildung nicht - wie bei Gasen - mit einem raschen Druckanstieg und der daraus resultierenden Explosionsgefahr verbunden ist.

**Patentansprüche**

1. Wiederaufladbare nichtwässrige elektrochemische Zelle (9) mit einer negativen Elektrode (4), einem auf Schwefeldioxid basierenden Elektrolyten und einer positiven Elektrode (3), wobei an der negativen Elektrode (4) beim Laden der Zelle eine aktive Masse abgelagert wird,
**dadurch gekennzeichnet, daß**
sie im Bereich der negativen Elektrode (4) ein Salz (10) im festen Zustand in einer porösen Struktur (11) aufweist, und
das Salz (10) so ausgebildet und angeordnet ist, daß es in Kontakt zu der aktiven Masse steht, die an der negativen Elektrode (4) abgelagert wird.

**2.** Zelle nach Anspruch 1, **dadurch gekennzeichnet, daß** die poröse Struktur (11) eine körnige Schüttung des Salzes (10) ist.

**3.** Zelle nach Anspruch 2, **dadurch gekennzeichnet, daß** die poröse Struktur (11) ein Verbund von Salzpartikeln ist.

**4.** Zelle nach einem der vorhergehenden Ansprüche, **dadurch gekennzeichnet, daß** die poröse Struktur des Salzes (10) so ausgebildet und angeordnet ist, daß die beim Laden abgelagerte aktive Masse der Elektroden in ihre Poren eindringt.

**5.** Zelle nach einem der vorhergehenden Ansprüche, **dadurch gekennzeichnet, daß** das Salz (10) in einem porösen Feststoff-Schichtmaterial (17) enthalten ist.

**6.** Zelle nach Anspruch 5, **dadurch gekennzeichnet, daß** die Porengröße des Feststoff-Schichtmaterials (17) unabhängig von der Korngröße des Salzes so groß ist, daß die beim Laden abgelagerte aktive Masse der Elektrode in seine Poren eindringt.

**7.** Zelle nach Anspruch 5, **dadurch gekennzeichnet, daß** das poröse Feststoff-Schichtmaterial (17) ein Trägermaterial (18) enthält, das derartig mit Salz (10) beschichtet ist, daß die Poren (19) nicht vollständig geschlossen sind.

**8.** Zelle nach Anspruch 7, **dadurch gekennzeichnet, daß** das Trägermaterial als flexible Faserverbundstruktur ausgebildet ist.

**9.** Zelle nach einem der Ansprüche 5 bis 8, **dadurch gekennzeichnet, daß** das poröse Feststoff-Schichtmaterial aus einer Mischung besteht, die das Salz und ein Bindemittel enthält.

**10.** Zelle nach Anspruch 9, **dadurch gekennzeichnet, daß** das Bindemittel ein Polymer, insbesondere ein Fluorpolymer enthält.

**11.** Zelle nach einem der vorhergehenden Ansprüche, **dadurch gekennzeichnet, daß** das Salz (10) ein Alkalihalogenid, insbesondere LiF, NaCl oder LiCl, ist.

**12.** Zelle nach einem der vorhergehenden Ansprüche, **dadurch gekennzeichnet, daß** die aktive Masse ausgewählt ist aus der Gruppe bestehend aus den Alkalimetallen, den Erdalkalimetallen und den Metallen der zweiten Nebengruppe des Periodensystems.

**13.** Zelle nach einem der Ansprüche 1 bis 11, **dadurch gekennzeichnet, daß** die aktive Masse Lithium, Natrium, Kalzium, Zink oder Aluminium ist.

**14.** Zelle nach einem der Ansprüche 12 oder 13, **dadurch gekennzeichnet, daß** die positive Elektrode (3) ein Metalloxid enthält.

**15.** Zelle nach Anspruch 14, **dadurch gekennzeichnet, daß** die positive Elektrode (3) eine Interkalationsverbindung enthält.

**Claims**

**1.** Rechargeable non-aqueous electrochemical cell (9) comprising a negative electrode (4), an electrolyte based on sulfur dioxide and a positive electrode (3), wherein an active mass is deposited at the negative electrode (4) during charging of the cell,
**characterized in that**
it contains a salt (10) in solid state in a porous structure (11) in the range of the negative electrode (4) and the salt (10) is provided and arranged in such a manner that it is in contact with the active mass which is deposited at the negative electrode (4).

**2.** Cell according to claim 1, **characterized in that** the porous structure (11) is a granular filling of the salt (10).

**3.** Cell according to claim 2, **characterized in that** the porous structure (11) is a solid body of salt particles.

4. Cell according to any one of the preceding claims, **characterized in that** the porous structure of the salt (10) is provided and arranged in such a manner that the active mass of the electrodes, deposited during the charge, penetrates into the pores of the porous structure.

5. Cell according to any one of the preceding claims, **characterized in that** the salt (10) is contained in a porous solid matter layer material (17).

6. Cell according to claim 5, **characterized in that** the pore size of the solid matter layer material (17) is, irrespective of the grain size of the salt, large enough to allow during charging penetration of the active mass deposited at the electrode into the pores of the layer material.

7. Cell according to claim 5, **characterized in that** the porous solid matter layer material (17) comprises a carrier material (18) coated with salt (10) in such a manner that its pores (19) are not completely closed.

8. Cell according to claim 7, **characterized in that** the carrier material is a flexible fiber compound structure.

9. Cell according to any one of claims 5 to 8, **characterized in that** the porous solid matter layer material is made from a mixture containing the salt and a binder.

10. Cell according to claim 9, **characterized in that** the binder contains a polymer, in particular a fluor polymer.

11. Cell according to any one of the preceding claims, **characterized in that** the salt (10) is an alkali metal halide, in particular LiF, NaCl or LiCl.

12. Cell according to any one of the preceding claims, **characterized in that** the active mass is selected from the group consisting of the alkali metals, the alkali earth metals and the metals of the second subgroup of the periodic chart of the elements.

13. Cell according to any one of claims 1 to 11, **characterized in that** the active mass is lithium, sodium, calcium, zinc or aluminum.

14. Cell according to any one of claims 12 or 13, **characterized in that** the positive electrode (3) contains a metal oxide.

15. Cell according to claim 14, **characterized in that** the positive electrode (3) contains an intercalation compound.

**Revendications**

1. Cellule électrochimique non aqueuse rechargeable (9) comportant une électrode négative (4), un électrolyte à base de dioxyde de soufre et une électrode positive (3), une matière active se déposant à l'électrode négative (4) lors de la charge de la cellule,
   **caractérisée en ce que**
   elle comprend dans la région de l'électrode négative (4) un sel (10) à l'état solide dans une structure poreuse (11), et
   le sel (10) est formé et disposé de telle sorte qu'il est en contact avec la matière active qui se dépose à l'électrode négative (4).

2. Cellule selon la revendication 1, **caractérisée en ce que** la structure poreuse (11) est un dépôt en grains du sel (10).

3. Cellule selon la revendication 2, **caractérisée en ce que** la structure poreuse (11) est un assemblage de particules de sel.

4. Cellule selon l'une des revendications précédentes, **caractérisée en ce que** la structure poreuse du sel (10) est formée et disposée de telle façon que la matière active des électrodes déposée lors de la charge pénètre dans ses pores.

5. Cellule selon l'une des revendications précédentes, **caractérisée en ce que** le sel (10) est contenu dans un matériau en couche solide poreux (17).

6. Cellule selon la revendication 5, **caractérisée en ce que** la taille des pores du matériau en couche solide poreux (17) est, indépendamment de la taille des grains du sel, si grande que la matière active des électrodes déposée lors de la charge pénètre dans ses pores.

7. Cellule selon la revendication 5, **caractérisée en ce que** le matériau en couche solide poreux (17) contient un matériau porteur (18) qui est recouvert de sel de telle manière que les pores (19) ne soient pas complètement obturés.

8. Cellule selon la revendication 7, **caractérisée en ce que** le matériau porteur est formé en tant que structure flexible d'assemblage de fibres.

9. Cellule selon l'une des revendications 5 à 8, **caractérisée en ce que** le matériau en couche solide poreux est constitué d'un mélange qui contient le sel et un liant.

10. Cellule selon la revendication 9, **caractérisée en ce que** le liant contient un polymère, en particulier un polymère fluoré.

11. Cellule selon l'une des revendications précédentes, **caractérisée en ce que** le sel (10) est un halogénure alcalin, en particulier LiF, NaCl ou LiCl.

12. Cellule selon l'une des revendications précédentes, **caractérisée en ce que** la matière active est choisie dans le groupe composé des métaux alcalins, des métaux alcalinoterreux et des métaux du deuxième sous-groupe du système périodique.

13. Cellule selon l'une des revendications 1 à 11, **caractérisée en ce que** la matière active est du lithium, du sodium, du calcium, du zinc ou de l'aluminium.

14. Cellule selon l'une des revendications 12 ou 13, **caractérisée en ce que** l'électrode positive (3) contient un oxyde métallique.

15. Cellule selon la revendication 14, **caractérisée en ce que** l'électrode positive (3) contient un composé d'intercalation.

Fig.1

Fig. 2

Fig. 3

Fig. 4